# EUROPÄISCHE PATENTSCHRIFT

(11) **EP 1 626 466 B1**
(45) Veröffentlichungstag und Bekanntmachung des Hinweises auf die Patenterteilung: **18.02.2015**
(21) Anmeldenummer: 05015047.3
(22) Anmeldetag: 12.07.2005
(51) Int. Cl.: H01R 25/16, H02B 1/20

(54) **Sammelschienenblock zur elektrisch leitenden Verbindung gleichphasiger Pole einer elektrischen Installationsverteilung**
Bus bar assembly for electrically conductive connection of in-phase pole in an electric distribution installation
Ensemble de barres de distribution pour une connexion électroconductrice d'un pôle en phase dans une installation de distribution électrique

(30) Priorität: 10.08.2004 DE 102004038961
(43) Veröffentlichungstag der Anmeldung: 15.02.2006
(73) Patentinhaber: Friedrich Göhringer GmbH, 78098 Triberg (DE)
(72) Erfinder: Müller, Bernhard, 78658 Zimmern (DE)
(74) Vertreter: Patentanwälte Westphal, Mussgnug & Partner

(56) Entgegenhaltungen:
- EP-A2- 0 467 170
- EP-A2- 1 139 531
- GB-A- 2 310 768
- GB-A- 2 318 694
- JP-A- 2001 177 953
- US-A- 5 229 922

## Beschreibung

Die Erfindung betrifft einen Sammelschienenblock zur elektrisch leitenden Verbindung gleichphasiger Pole einer elektrischen Installationsverteilung gemäß dem Oberbegriff des Anspruchs 1.

Bei der elektrischen Installation werden Sammelschienen verwendet, um gleichphasige Pole von elektrischen Schaltgeräten miteinander zu verbinden. Bei mehrphasigen Netzen muss eine entsprechende Anzahl von Sammelschienen vorgesehen werden, wobei die ungleichphasigen Sammelschienen gegeneinander elektrisch isoliert sein müssen. Hierzu werden die verschiedenphasigen Sammelschienen in die Kammern eines Isolierprofiles eingeschoben, wodurch ein kompakter Sammelschienenblock gebildet wird.

Ein Sammelschienenblock gemäß dem Oberbegriff des Patentanspruchs 1 wird beispielsweise in dem Katalog 2004 "Low Voltage Electricity" der Firma Auxel in Kapitel 1, Seite 1 angeboten. Die in den Sammelschienenblock einsetzbaren Sammelschienen weisen in Längsrichtung gegeneinander beabstandete, im Wesentlichen rechteckige, Kontaktfahnen auf. Auf diese Kontaktfahnen können flexible, isolierte Elektrokabel aufgeschoben und geklemmt werden. Mit Hilfe der Elektrokabel kann eine flexible Verbindung zwischen den elektrischen Schaltgeräten und dem Sammelschienenblock hergestellt werden. Die Schaffung einer flexiblen Verbindung macht die räumliche Anordnung des Sammelschienenblocks und der Schaltgeräte voneinander unabhängig.

Bei diesem bekannten Stand der Technik ist nachteilig, dass die Kontaktierung des Sammelmaschinenblocks an den elektrischen Schaltgeräten sehr aufwendig ist. Zunächst müssen die Sammelschienen und die Schaltgeräte unabhängig voneinander montiert werden. Daraufhin werden beide getrennten Systeme mit den Kabeln verbunden, wobei die Kabel auf die Schiene gesteckt und am elektrischen Schaltgerät verschraubt werden müssen. Der Sammelschienenblock muss außerdem zusätzlich zur Kontaktierung der elektrischen Schaltgeräte mittels der flexiblen Leitungen an geeigneter Stelle beispielsweise an einem Schaltkasten fixiert werden.

Ein Sammelschienenblock, der unmittelbar an den elektrischen Schaltgeräten montiert wird, ist aus der DE 1086579 A1 bekannt. Die Sammelschienen des dort beschriebenen Sammelschienenblocks weisen keine Kontaktfahnen auf - vielmehr sind starre Anschlusslaschen fest mit den Sammelschienen verbunden. Dabei sind die Anschlusslaschen der drei benachbarten Sammelschienen in Längsrichtung versetzt zueinander angeordnet. Bei diesem bekannten Sammelschienenblock ist nachteilig, dass die Anschlusslaschenfolge und -anzahl festgelegt ist.

Ein Sammelschienenblock gemäss dem Oberbegriff des Anspruchs 1 ist aus der EP-A-0467170 bekannt.

Der Erfindung liegt die Aufgabe zugrunde, einen einfach anzuschließenden Sammelschienenblock und ein Verfahren zum Kontaktieren eines Sammelschienenblocks vorzuschlagen.

Diese Aufgabe wird zum einen durch den Vorrichtungsanspruch 1 und zum anderen durch den Verfahrensanspruch 10 gelöst.

Vorteilhafte Weiterbildungen der Erfindung sind in den Unteransprüchen angegeben.

Bei dem erfindungsgemäßen Sammelschienenblock sind die Kontaktmittel als starre Anschlusslaschen ausgebildet. Unter starren Anschlusslaschen sind auch durch Krafteinwirkung verbiegbare Blechteile zu verstehen. Die Anschlusslaschen werden mittels separater Befestigungsmittel an den Kontaktfahnen befestigt. Dabei muss immer nur dann eine Anschlusslasche an einer Kontaktfahne angebracht werden, wenn an der entsprechenden Stelle ein Pol eines elektrischen Schaltgeräs kontaktiert werden muss. Hierdurch können die Materialkosten erheblich reduziert werden. Weiterhin ist die Aufeinanderfolge der Anschlusslaschen frei wählbar, was bedeutet, dass beispielsweise mehrere Anschlusslaschen unmittelbar hintereinander an der selben Sammelschiene befestigt werden können.

Die Befestigung des Sammelschienenblocks an den elektrischen Schaltgeräten ist montagefreundlich, da die Anschlusslaschen zunächst mit den Befestigungsmitteln an den Kontaktfahnen befestigt werden können, woraufhin der Sammelschienenblock mit den fluchtenden Einsteckbereichen der Anschlusslaschen in einen entsprechenden Montageschlitz der Schaltgeräte eingeschoben werden kann. Nach dem Einstecken der Laschen in den Montageschlitz, werden die Einsteckbereiche in den elektrischen Schaltgeräten geklemmt und somit einerseits elektrisch kontaktiert und andererseits auch gehalten. Hierdurch entfällt die Notwendigkeit einer separaten Fixierung des Sammelschienenblocks. Dieser wird allein durch die Klemmwirkung in seiner montierten Position gehalten.

Ein weiterer Vorteil dieses Kontaktierungsverfahrens besteht darin, dass die Anschlusslasche einfach in den häufig trichterförmigen Montageschlitz der elektrischen Geräte eingeführt werden kann. Sollte dennoch die eine oder andere Anschlusslasche nicht exakt fluchten, kann diese durch einen einfachen Handgriff gerade gebogen werden.

Im Folgenden wird die Erfindung anhand eines in der Zeichnung dargestellten Ausführungsbeispiels näher erläutert.

Dabei zeigen:
- Fig. 1: eine Draufsicht auf einen Sammelschienenblock mit montierten Anschlusslaschen,

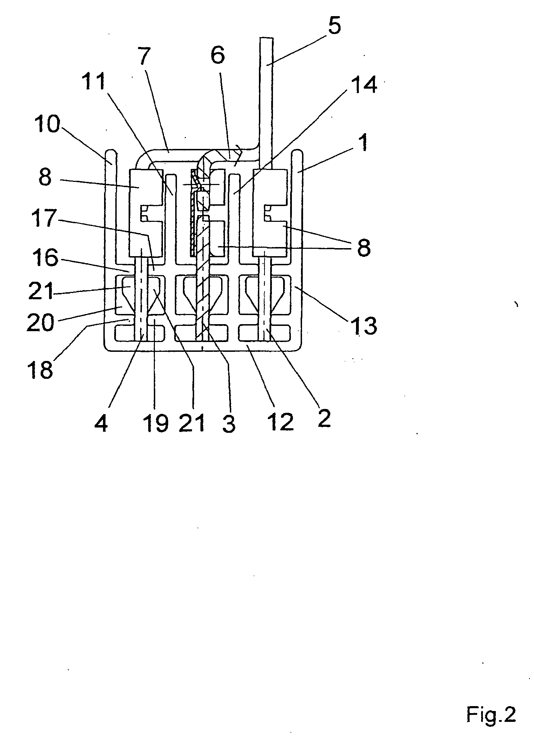

- Fig. 2: eine Ansicht mit Teilschnitt durch den Sammelschienenblock,
- Fig. 3: einen Längsschnitt durch den Sammelschienenblock in verschiedenen Schnittebenen,
- Fig. 4: eine gerade Anschlusslasche,
- Fig. 5: eine abgekröpfte Anschlusslasche und
- Fig. 6: eine abgekröpfte Anschlusslasche.

Das Ausführungsbeispiel zeigt den häufigsten Fall eines Sammelschienenblocks 1 für ein dreiphasiges Netz. Der Sammelschienenblock 1 weist dementsprechend drei Sammelschienen 2, 3 und 4 auf. Die erfindungsgemäße Ausbildung des Sammelschienenblocks 1 kann selbstverständlich auch bei einer Sammelschiene oder auch bei einer anderen Anzahl von Sammelschienen in entsprechender Anpassung verwendet werden.

Die Sammelschienen 2, 3 und 4 sind in ein Isolierprofil 9 eingesetzt, welches in an sich bekannter Weise ein Kunststoff - Extrusionsprofil ist.

Das Isolierprofil 9 weist drei im Wesentlich U-förmig ausgebildete Kammern auf, die in der Darstellung der Zeichnung nach oben offen sind. Die in der Zeichnung linke Kammer wird durch eine linke äußere Seitenwand 10 und eine zu dieser parallele innere linke Trennwand 11 gebildet, die durch einen Boden 12 an der Unterseite des Isolierprofils miteinander verbunden sind. Der Boden 12 ist allen Kammern, also auch der mittleren Kammer und der rechten Kammer gemeinsam. Die rechte Kammer wird durch eine rechte Seitenwand 13 und eine rechte innere Trennwand 14 sowie auf der Unterseite durch den Boden 12 begrenzt. Die mittlere Kammer wird durch die linke innere Trennwand 11 sowie die rechte innere Trennwand 14 gebildet, die ebenfalls an der Unterseite des Isolierprofils durch den gemeinsamen Boden 12 miteinander verbunden sind.

Die rechte Sammelschiene 2 wird in die rechte Kammer und die linke Sammelschiene 4 in die linke Kammer eingesetzt. Die mittlere Sammelschiene 3 wird in die mittlere Kammer eingeschoben. Alle Sammelschienen 2, 3, 4 sind identisch aufgebaut. Jede Sammelschiene ist mit einer Vielzahl von Kontaktfahnen 15 versehen, die in Längsrichtung gegeneinander beabstandet angeordnet sind. Die Sammelschienen 2, 3 4 sind in dem Isolierprofil 9 derart zueinander ausgerichtet, dass die Kontaktfahnen 15 der drei Sammelschienen jeweils die gleiche Position in Längsrichtung einnehmen. Die Kontaktfahnen 15 sind einstückig an den Sammelschienen 2, 3 und 4 angeformt und stehen nach oben ab. Dabei sind die Seitenwände 10, 13 des Isolierprofils so bemessen, dass sie die Kontaktfahnen 15 überragen. Sämtliche Trennwände 11, 14 überragen ebenfalls die Kontaktfahnen 15, so dass diese vollkommen berührungssicher innerhalb der Kammern aufgenommen sind.

Innerhalb jeder Kammer sind vier sich horizontal erstreckende, in Längsrichtung verlaufende Stege 16, 17, 18 und 19 vorgesehen. Dabei sind jeweils zwei Stege 16, 17 und 18, 19 einander gegenüberliegend angeordnet, wobei die zwei Stege 16, 18 und 17, 19 an derselben Kammerwand mit Abstand übereinander einstückig angeformt sind. Die sich gegenüberliegenden Stege 16, 17 und 18, 19 liegen zu beiden Seiten an der jeweiligen Sammelschiene 2, 3, 4 an und zentrieren und stabilisieren diese innerhalb der Kammer.

Die Stege 16, 18 und 17, 19 schließen jeweils einen nutförmigen Raum 20 ein. Innerhalb dieses von den übereinanderliegenden Stegen gebildeten Raums 20 sind an den Sammelschienen 2, 3, 4 zu beiden Seiten in Längsrichtung beabstandete Ausprägungen 21 vorgesehen, die eine Entnahme der Sammelschienen 2, 3, 4 in Richtung Anschlussseite verhindern. Hierdurch wird u.a. das Isolierprofil 9 auf den an den elektrischen Schaltgeräten montierten Sammelschienen 2, 3, 4 gehalten, so dass ohne zusätzliche Fixierung ein zuverlässige Isolierung der Sammelschienen gewährleistet ist.

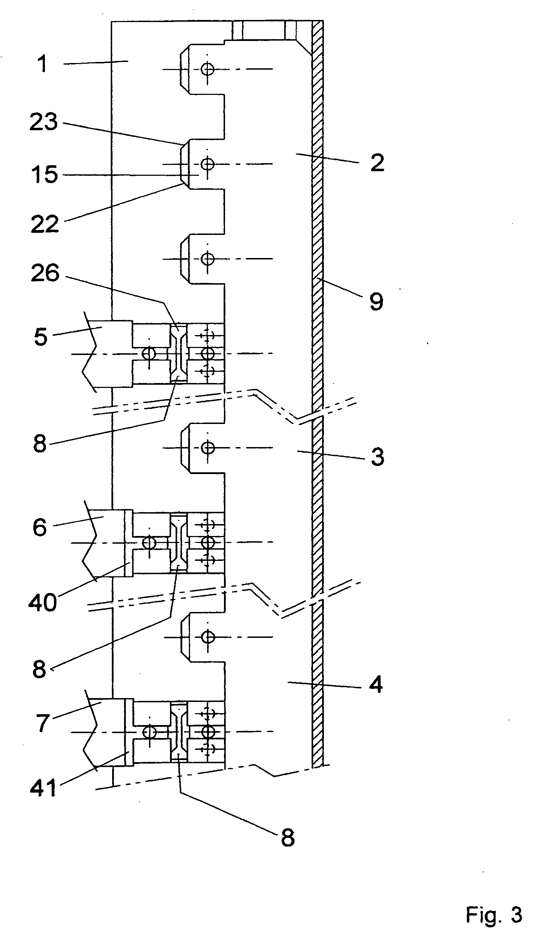

Wie insbesondere aus Figur 3 ersichtlich ist, sind die Kontaktfahnen 15 in der Seitenansicht im wesentlichen rechteckig ausgebildet und weisen zwei in Längsrichtung gegenüberliegende Einlaufschrägen 22, 23 auf, die gegeneinander ansteigen, so dass sich die Kontaktfahnen 15 in Richtung Anschlussseite verjüngen.

Mit Hilfe eines separaten speziellen Kabelschuhs 8 kann auf jeder Kontaktfahne 15 eine Anschlusslasche 5, 6, 7 geklemmt und somit elektrisch leitend verbunden werden. Dabei ist jede Anschlusslasche 5, 6, 7 selbst mit einem Befestigungsbereich 25 in dem Kabelschuh 8 klemmend befestigt.

Der Kabelschuh 8 besteht aus einem rechteckigen Grundblech 26, wobei einstückig mit dem Grundblech 4 um 180° zur Grundblechmitte hin gebogene Lasche 27, 28, 29 und 30 vorgesehen sind.

Dabei sind jeweils zwei Laschen 27, 28 und 29, 30 gegenüberliegend angeordnet und bilden je ein Laschenpaar. Jeweils ein Laschenpaar ist am oberen und am unteren Ende des Grundblechs 26 angeordnet. Die Laschen 27, 28, 29 und 30 erstrecken sich nicht bis zur Grundblechmitte. Statt dessen sind die freien Enden 31, 32, 33 und 34 der Laschen 27, 28, 29 und 30 um 90° zum Grundblech 26 hin abgewinkelt. Der Kabelschuh 8 ist vollkommen symmetrisch aufgebaut. Zwischen je ein Laschenpaar 27, 28 und 29, 30 und das Grundblech 26 ist ein Befestigungsbereich 25 einer Anschlusslasche 5, 6, 7 oder eine Kontaktfahne 15 einer Sammelschiene 2, 3, 4 einschiebbar und klemmbar. Der Befestigungsbereich 25 und die Kontaktfahne 15 werden mittels der abgewinkelten freien Enden 31, 32, 33 und 34 gegen das Grundblech 26 gedrückt, und dadurch mechanisch geklemmt und elektrisch kontaktiert.

Die Einlaufschrägen 22, 23 am oberen Ende der Kontaktfahnen 15 erleichtern ein Einschieben in den Kabelschuh 8. Der Befestigungsbereich 25 der Anschlusslasche 5, 6, 7 ist in analoger Weise mit zwei Einlaufschrägen 35, 36 ausgebildet. In dem Grundblech 26 des Kabelschuhs 8 sind etwa mittig in der mit dem Befestigungsbereich 25 in Berührung kommenden Fläche eine Ausprägung 37 und den Laschen 29 und 30 gegenüber Ausprägungen 38 vorgesehen. Die Ausprägung 37 ist in der Höhe stärker bemessen als die Ausprägungen 38. Dadurch ist gewährleistet, dass bei einer Demontage der Kabelschuh 8 mit der jeweiligen Anschlusslasche 5, 6, 7 verbunden bleibt.

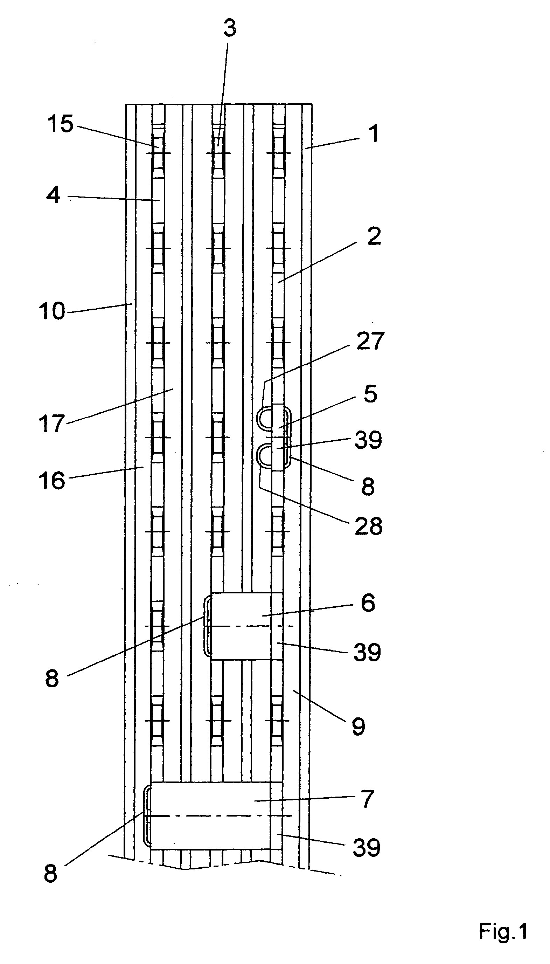

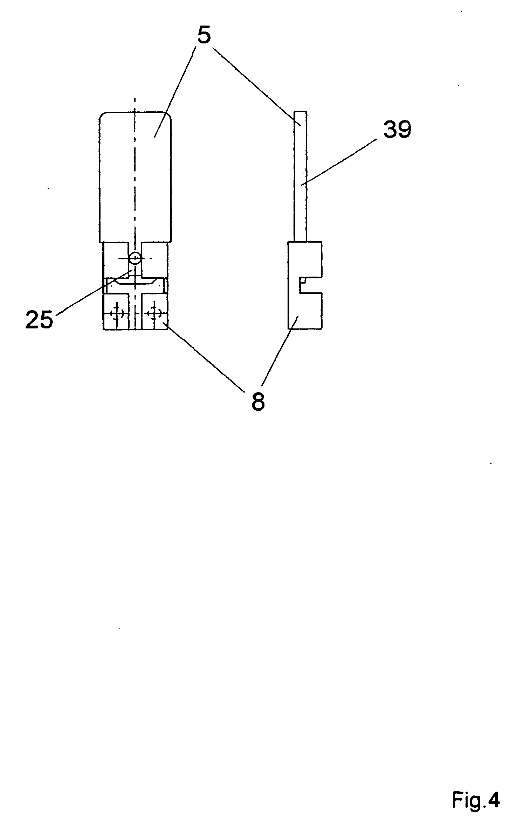

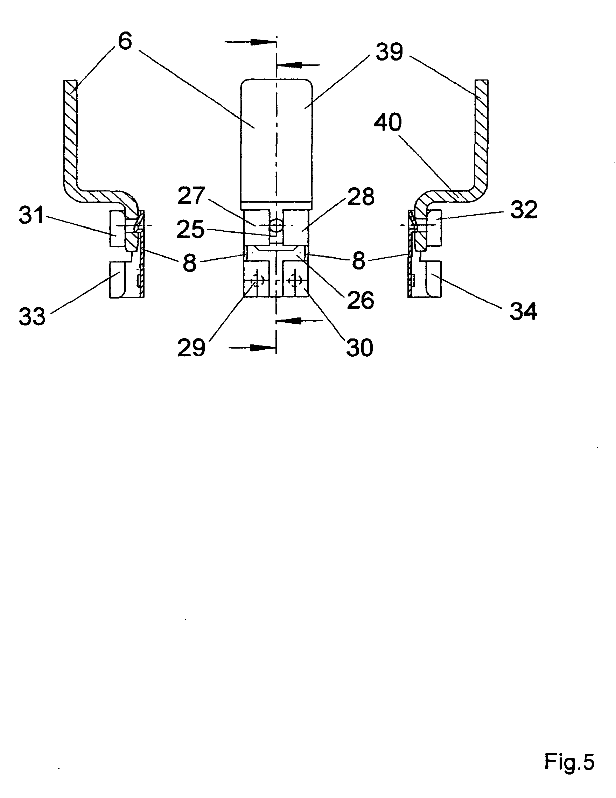

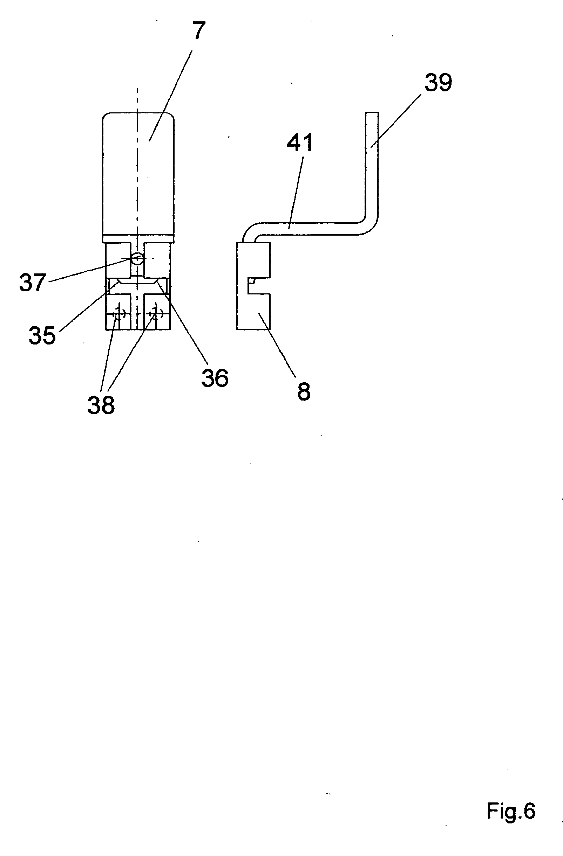

An ihren freien Enden weisen die Anschlusslaschen 5, 6, 7 je einen Einsteckbereich 39 auf. Mit Hilfe der Einsteckbereiche 39 werden die Sammelschienen 2, 3, 4 an die Pole der Installationsverteilung angeschlossen. In dem dargestellten Ausführungsbeispiel fluchten die Einsteckbereiche 39 mit den Befestigungsbereichen 25 bei den Anschlusslaschen 5 für die Sammelschiene 2, wie Figur 4 zeigt. Bei den Anschlusslaschen 6 und 7 (Figuren 5 und 6) sind die Einsteckbereiche 39 gegen die Befestigungsbereiche 25 derart abgekröpft, dass die Einsteckbereiche 39 der Anschlusslaschen 5, 6, 7 in Längsrichtung fluchten. Dies ist insbesondere aus Figur 1 ersichtlich.

Die Anschlusslaschen 6, 7 sind zweimal um 90° umgebogen. Hierdurch wird der horizontale Mittelbereich 40, 41 der Anschlusslaschen 6, 7 von den Seitenwänden 10, 13 überragt, so dass nur die Einsteckbereiche 39 über das Isolierprofil 9 herausragen.

Die Ausbildung des Kabelschuhs 8 als separates Element hat auch den Vorteil, dass für den Kabelschuh und die Anschlusslaschen 5, 6, 7 unterschiedliche Blechstärken verwendet werden können, insbesondere mit einer höheren Steifigkeit für die Anschlusslaschen 5, 6, 7 und einer höheren Federelastizität für den Kabelschuh 8.

Nach dem die elektrischen Schaltgeräte montiert worden sind, werden die im Sammelschienenblock 1 montierten Sammelschienen 2, 3, 4 mit den benötigten Anschlusslaschen 5, 6, 7 mit Hilfe der bereits auf die Anschlusslaschen aufgesteckten Kabelschuhe 8 bestückt. Daraufhin wird der Sammelschienenblock 1 mit den fluchtenden Einsteckbereichen 39 der Anschlusslaschen 5, 6, 7 in die Montageschlitze der elektrischen Schaltgeräte geschoben und dort verklemmt.

### Bezugszeichenliste

- 1: Sammelschienblock
- 2, 3, 4: Sammelschienen
- 5, 6, 7: Anschlusslaschen
- 8: Kabelschuh
- 9: Isolierprofil
- 10: linke Seitenwand
- 11: innere linke Trennwand
- 12: Boden
- 13: rechte Seitenwand
- 14: innere rechte Trennwand
- 15: Kontaktfahne
- 16, 17, 18, 19: Stege
- 20: Raum
- 21: Ausprägungen
- 22: Einlaufschräge
- 23: Einlaufschräge
- 25: Befestigungsbereich
- 26: Grundblech
- 27, 28, 29, 30: Laschen
- 31, 32, 33, 34: freie Enden
- 35: Einlaufschräge
- 36: Einlaufschräge
- 37, 38: Ausprägungen
- 39: Einsteckbereich
- 40: mittlerer Bereich
- 41: mittlerer Bereich

## Patentansprüche

1. Sammelschienenblock zur elektrisch leitenden Verbindung gleichphasiger Pole einer elektrischen Installationsverteilung, mit einem Isolierprofil und mit in das Isolierprofil eingesetzten Sammelschienen, wobei das Isolierprofil mehrere parallele in Längsrichtung verlaufende Kammern zur Aufnahme von jeweils einer Sammelschiene aufweist, wobei die Kammern sich in dem Isolierprofil nach derselben Längsseite, nämlich der Anschlusseite öffnen, wobei die Sammelschienen in Richtung der Anschlussseite ragende, in Längsrichtung gegeneinander beabstandete Kontaktfahnen aufweisen, wobei mindestens eine Anschlusslasche (7) zur Befestigung an wenigstens einer äußeren Sammelschiene so abgekröpft ist, wobei die Kontaktfahnen (15) einstückig an den Sammelschienen (2, 3, 4) abgeformt sind, wobei
starre Anschlusslaschen (5, 6, 7) mittels der Befestigungsmittel an den Kontaktfahnen elektrisch leitend befestigbar sind, die Anschlusslaschen (5, 6, 7) je einen Befestigungsbereich (25) zur Befestigung mittels der Befestigungsmittel an einer Kontaktfahne (15) und einen davon beabstandeten Einsteckbereich (39) zum Abschließen der Pole aufweisen, **dadurch gekennzeichnet dass** die Befestigungsmittel separate Befestigungsmittel sind, dass alle Sammelschienen (2, 3, 4) identisch aufgebaut sind, und dass die Sammelschienen (2, 3, 4) in dem Isolierprofil (9) derart zueinander ausgerichtet sind, dass die Kontaktfahnen (15) der Sammelschienen (2, 3, 4) jeweils die gleiche Position in Längsrichtung einnehmen.

2. Sammelschienenblock nach Anspruch 1,
**dadurch gekennzeichnet, dass** als Befestigungsmittel, zum elektrisch leitenden Verbinden des Befestigungsbereichs (25) der Anschlusslasche (5, 6, 7) mit einer Kontaktfahne (15), ein Kabelschuh (8) vorgesehen ist.

3. Sammelschienenblock nach Anspruch 2,
**dadurch gekennzeichnet, dass** der Kabelschuh (8) ein separates Bauteil ist, welches einerseits auf die Kontaktfahne (15) und andererseits auf den Befestigungsbereich (25) der Anschlusslasche (5, 6, 7) aufsteckbar ist.

4. Sammelschienenblock nach Anspruch 3,
**dadurch gekennzeichnet, dass** der Kabelschuh (8) ein Grundblech (26) mit zwei in Längsrichtung beabstandeten Klemmbereichen aufweist, wobei jeder Klemmbereich durch zwei quer zu Längsrichtung angeordnete, gegenüberliegende Klemmlaschen (27, 28; 29, 30) gebildet ist.

5. Sammelschienenblock nach einem der vorhergehenden Ansprüche, **dadurch gekennzeichnet, dass** die Kontaktfahnen (15) benachbarter Sammelschienen (2, 3, 4) quer zur Längsrichtung der Sammelschienen (2, 3, 4) fluchtend angeordnet sind.

6. Sammelschienenblock nach einem der vorhergehenden Ansprüche, **dadurch gekennzeichnet, dass** die äußeren Seitenwände (10, 13) des Isolierprofils (9) die Kontaktfahnen (15) überragen.

7. Sammelschienenblock nach einem der vorhergehenden Ansprüche, **dadurch gekennzeichnet, dass** die Kontaktfahnen (15) im wesentlichen rechteckig ausgebildet sind und dass die Kontaktfahnen zwei in Längsrichtung der Sammelschienen (2, 3, 4) beabstandete, gegeneinander ansteigende Einlaufschrägen (22, 23) aufweisen.

8. Sammelschienenblock nach einem der vorhergehenden Ansprüche, **dadurch gekennzeichnet**, die Befestigungsbereiche (25) der Anschlusslaschen (5, 6, 7) zwei in Längsrichtung der Sammelschienen (2, 3, 4) beabstandete, gegeneinander ansteigende Einlaufschrägen (35, 36) aufweisen.

9. Sammelschienenblock nach einem der vorhergehenden Ansprüche, **dadurch gekennzeichnet, dass** in den mit den Befestigungsbereichen (25) der Anschlusslaschen (5, 6, 7) und/oder den Kontaktfahnen (15) in Kontakt kommenden Bereichen des Kabelschuhs (8) Ausprägungen (37, 38) zur Klemmung des Kabelschuhs (8) vorgesehen sind.

10. Verfahren zum Kontaktieren eines Sammelschienenblocks mit den Merkmalen eines der vorhergehenden Ansprüche mit elektrischen Schaltgeräten, **dadurch gekennz eichnet**, dass zunächst die Schaltgeräte montiert und die starren Anschlusslaschen (5, 6, 7) mit den separaten Befestigungsmitteln an den einstückigen Kontaktfahnen (15) der Sammelschienen (2, 3, 4) elektrisch leitend befestigt werden und dass danach der Sammelschienenblock (1) mittels der Einsteckbereiche (39) der Anschlusslaschen (5, 6, 7) mit den Schaltgeräten kontaktiert wird.

## Claims

1. Busbar assembly for the electrically conducting connection of the in-phase poles of an electrical distribution installation, with an insulating profile, and having busbars inserted in that profile, such that the insulating profile has several chambers running parallel in a length wise direction, each for the reception of a busbar, and whereby the chambers open into the insulation profile along the same side wall, namely the connection side, the busbars having projecting contact tabs spaced apart lengthwise from one another in the direction of the connection side, **characterised by** the fact that rigid connecting brackets (5, 6, 7) can be attached to the contact tabs in an electrically conducting manner by means of fasteners, whereby the connecting brackets (5, 6, 7) each have a fastening area (25) for attaching to a contact tab (15) by means of a fastener, and a plug-in region (39) spaced apart from it for attaching the poles, such that at least one connecting bracket (7), for fastening to at least one outer busbar, is bent so that the plug-in regions (39) of the connecting brackets (5, 6, 7) are aligned lengthwise; also **characterised by** the facts that the fasteners are separate fasteners, that all busbars (2, 3, 4) are identically constructed such that the contact tabs (15) are moulded to the busbars (2, 3, 4) in one piece, and that the busbars (2, 3, 4) are orientated to one another in the insulation profile (9) in such a way that the contact tabs (15) of the busbars (2, 3, 4) each occupy the same lengthwise position.

2. Busbar assembly in accordance with Claim 1, **characterised by** the fact that a cable shoe (8) is provided as a fastener for the electrically conducting connection of the fastening area (25) of the connecting brackets (5, 6, 7) with a contact tab (15).

3. Busbar assembly in accordance with Claim 2, **characterised by** the fact that the cable shoe (8) is a separate component, which on one side can be plugged into the contact tab (15), and on the other to the fastening area (25) of the connecting brackets (5, 6, 7).

4. Busbar assembly in accordance with Claim 3, **characterised by** the fact that the cable shoe (8) has a base plate (26) with two clamping areas spaced apart lengthwise from one another, such that each clamping area is formed by two opposing clamps (27, 28; 29, 30) positioned transversely.

5. Busbar assembly in accordance with one of the foregoing claims, **characterised by** the fact that the busbars (2, 3, 4) adjacent to the contact tabs (15) are positioned transversely to the busbars (2, 3, 4).

6. Busbar assembly in accordance with one of the foregoing claims, **characterised by** the fact that outer side walls (10, 13) of the insulating profile (9) surmount the contact tabs (15).

7. Busbar assembly in accordance with one of the foregoing claims, **characterised by** the fact that the contact tabs (15) are essentially formed as rectangles and that the contact tabs have two infeed chamfers (22, 23) inclined to one another, and spaced apart in the lengthwise direction of the busbars (2, 3, 4).

8. Busbar assembly in accordance with one of the foregoing claims, **characterised by** the fact that the fastening areas (25) of the connecting brackets (5, 6, 7) have two infeed chamfers (35, 36) inclined to one another, and spaced apart in the lengthwise direction of the busbars (2, 3, 4).

9. Busbar assembly in accordance with one of the foregoing claims, **characterised by** the fact that mouldings (37, 38) are provided in the parts of the cable shoe (8) coming into contact with the fastening areas (25) of the connecting brackets (5, 6, 7) and/or the contact tabs (15) for clamping the cable shoe (8).

10. Procedure for the provision of contacts for a busbar assembly with the features of one of the foregoing claims, and having electrical switching devices, **characterised by** the fact that the switching device is fitted first, and the rigid connecting brackets (5, 6, 7) are secured in an electrically conducting manner to the one-piece contact tabs (15) of the busbars (2, 3, 4) by a separate means of fastening, and that the busbar assembly (1) is subsequently placed in contact with the switching devices by means of the plug-in regions (39) of the connecting brackets (5, 6, 7).

## Revendications

1. Bloc de barres collectrices pour permettre la liaison électriquement conductrice de pôles en phase d'une installation de distribution électrique comprenant un profilé isolant et des barres collectrices insérées dans ce profilé isolant, le profil isolant comportant plusieurs chambres s'étendant parallèlement dans la direction longitudinale pour recevoir une barre collectrice respective, ces chambres s'ouvrant dans le profilé isolant sur la même face longitudinale, à savoir la face de connexion, les barres collectrices comportant, en direction de la face de connexion des lamelles de contact en saillie situées à distance les unes des autres dans la direction longitudinale, des pattes de connexion rigides (5, 6, 7) pouvant être fixées de façon électriquement conductrice sur les lamelles de contact par des moyens de fixation, les lamelles de contact (15) étant réalisées en une seule pièce sur les barres collectrices (2, 3, 4), les pattes de connexion (5, 6, 7) comportant chacune une zone de fixation (25) pour permettre sa fixation par les moyens de fixation sur une lamelle de contact (15) et une zone d'enfichage (39) distante de celle-ci pour permettre la connexion des pôles, et au moins une patte de connexion (7) étant recourbée pour permettre sa fixation sur au moins une barre collectrice externe, de sorte que les zones d'enfichage (39) des pattes de connexion (5, 6, 7) soient alignées dans la direction longitudinale,
**caractérisé en ce que**
les moyens de fixation sont des moyens de fixation séparés, toutes les barres collectrices (2, 3, 4) sont réalisées de manière identique, et les barres collectrices (2, 3, 4) sont orientées les unes par rapport aux autres dans le profilé isolant (9) de sorte que les lamelles de contact (15) des barres collectrices (2, 3, 4) prennent respectivement la même position en direction longitudinale.

2. Bloc de barres collectrices conforme à la revendication 1,
**caractérisé en ce que**
les moyens de fixation permettent la liaison électriquement conductrice de la zone de fixation (23) des pattes de connexion (5, 6, 7) avec une lamelle de contact (15) sont constitués par une cosse de câble.

3. Bloc de barres collectrices conformes à la revendication 2,
**caractérisé en ce que**
la cosse de câble (8) est un élément séparé qui peut être enfiché d'une part sur les lamelles de contact (15) et d'autre part, sur la zone de fixation (25) des pattes de connexion (5, 6, 7).

4. Bloc de barres collectrices conforme à la revendication 3,
**caractérisé en ce que**
la cosse de câble (8) comporte une tôle de base (26) équipée de deux zones de serrage situées à distance l'une de l'autre en direction longitudinale, chacune de ces zones de serrage étant formée par deux pattes de serrage opposées (27, 28, 29, 30) disposées transversalement à la direction longitudinale.

5. Bloc de barres collectrices conforme à l'une des revendications précédentes,
**caractérisé en ce que**
les lamelles de contact (15) de barres collectrices (2, 3, 4) voisines sont alignées transversalement à la direction longitudinale des barres collectrices (2, 3, 4).

6. Bloc de barres collectrices conforme à l'une des revendications précédentes,
**caractérisé en ce que**
les parois latérales externes (10, 13) du profilé isolant (9) dépassent des lamelles de contact (15)

7. Bloc de barres collectrices conforme à l'une des revendications précédentes,
**caractérisé en ce que**
les lamelles de contact (15) ont une forme essentiellement rectangulaire et comportent deux biseaux (22, 23) de pentes opposées, situés à distance dans la direction longitudinale des barres collectrices (2, 3, 4).

8. Bloc de barres collectrices conforme à l'une des revendications précédentes,
**caractérisé en ce que**
les zones de fixation (25) des pattes de connexion (5, 6, 7) comportent deux biseaux (35, 36) de pentes opposées situés à distance dans la direction longitudinale des barres collectrices (2, 3, 4).

9. Bloc de barres collectrices conforme à l'une des revendications précédentes,
**caractérisé en ce que**
dans les zones de la cosse de câble (8) venant en contact avec les zones de fixation (25) des pattes de connexion (5, 6, 7) et/ou des lamelles de contact (15) sont prévus des formages (37, 38) pour permettre le serrage de la cosse de câble (8).

10. Procédé de mise en contact d'un bloc de barres collectrices conforme à l'une des revendications précédentes, avec des appareils de commutation électriques
**caractérisé en ce que**
les appareils de commutations sont tout d'abord montés et les pattes de connexion fixe (5, 6, 7) sont fixées de façon électriquement conductrice avec les moyens de fixation séparés sur les lamelles de contact (15) en une seule pièce des barres collectrices (2, 3, 4), et ensuite, le bloc de barres collectrices (1) est mis en contact avec les appareils de commutation au moyen des zones d'enfichage (34) des pattes de contact (5, 6 et 7).
